Europäisches Patentamt

**European Patent Office**

**Office européen des brevets**

(11) Numéro de publication: **0 214 948 B1**

# FASCICULE DE BREVET EUROPEEN

(45) Date de publication de fascicule du brevet: **15.04.92**   (51) Int. Cl.⁵: **F16G   13/06**

(21) Numéro de dépôt: **86870119.4**

(22) Date de dépôt: **25.08.86**

(54) **Chaîne a douilles du type GALLE.**

(30) Priorité: **12.09.85 BE 215570**
**15.05.86 BE 216676**

(43) Date de publication de la demande:
**18.03.87 Bulletin   87/12**

(45) Mention de la délivrance du brevet:
**15.04.92 Bulletin   92/16**

(84) Etats contractants désignés:
**AT BE CH DE FR GB IT LI LU NL SE**

(56) Documents cités:
**EP-A- 0 119 898**
**GB-A- 922 307**
**US-A- 2 816 453**
**US-A- 3 135 128**

**MACHINE DESIGN, vol. 53, no. 14, 18 juin
1981, pages 137-194, Cleveland, Ohio, US;
"Section 2 bearings"**

**SPRECHSAAL FÜR KERAMIK-
GLAS-EMAIL-SILIKATE, vol. 99, no. 3, 5 février 1966, pages 100-101; "Förderketten mit
Kunststoffbuchsen**

(73) Titulaire: **ELECTRABEL
Mechelsesteenweg 271
B-2018 Antwerpen(BE)**

(72) Inventeur: **Beeuwsaert, Dirk
Herpelgem 11
B-9690 Kluisbergen(BE)**

(74) Mandataire: **Vanderperre, Robert et al
Bureau Vander Haeghen S.A. Rue Colonel
Bourg 108 A
B-1040 Bruxelles(BE)**

## Description

La présente invention est relative à une chaine du type GALLE à douilles en matière synthétique constituée d'une série de maillons larges et de maillons étroits reliés entre eux par des articulations, dans laquelle les maillons larges forment un ensemble comprenant au moins deux plaques parallèles extérieures reliées entre elles par deux fuseaux et les maillons étroits formant un ensemble composé de deux plaques parallèles intérieures, enserrées dans les plaques extérieures et maintenues entre elles par deux tubes métalliques qui tournent librement par l'intermédiaire d'une première série de douilles réalisées en matériau composite et sur lesquels ont été montés des rouleaux tournant librement sur ces tubes par l'intermédiaire d'une seconde série de douilles en matériau composite.

Elle trouve sa principale application en tant qu'organe de transmission mécanique dans des appareils d'entraînement, des systèmes de transport et dispositifs de chargement; en particulier, elle peut être utilisée pour réaliser une chaîne qui ne doit pas être graissée en cas d'utilisation sous l'eau, comme par exemple dans les filtres Beaudrey.

Les chaînes à maillons constituent des organes de transmission, dont l'usage est très répandu. Elles peuvent être montées à mailles simples ou à mailles multiples, par exemple doubles, triples et même quadruples.

Les maillons consécutifs de la chaîne sont reliés en des centres d'articulation constitués par les fuseaux des maillons extérieurs, qui traversent les tubes des maillons intérieurs adjacents.

Lors du fonctionnement de la chaîne, on assiste à une oscillation du tube autour du fuseau, et du rouleau autour du tube.

Chaque centre d'articulation de la chaîne peut être assimilé à un palier tournant par intermittence d'une fraction de tour lors de l'engrènement d'une dent d'un pignon.

Le rôle du rouleau est très important dans une chaîne à rouleaux. Le rouleau sert en effet de corps intermédiaire entre la chaîne et le pignon sur lequel s'enroule la chaîne ou entre la chaîne et la surface d'appui.

En roulant sur les flancs des dents du pignon moteur, le rouleau rend la marche de la chaîne silencieuse tout en amortissant les chocs et en diminuant fortement l'effort de torsion sur le tube qu'il protège.

Lors de l'utilisation de telles chaînes, qui sont généralement réalisées en acier, se pose le problème du graissage, surtout lorsque la chaîne est complètement ou partiellement immergée dans l'eau.

Pour chaque tour de chaîne, chaque articulation oscille deux fois en charge:
- une fois à l'entrée de la roue menante,
- une fois à la sortie de la roue menée.

A chaque fois, l'effort est reporté sur la liaison fuseau-tube.

En fait, de l'usure apparaît très rapidement à divers endroits de la chaîne, malgré un graissage régulier et abondant.

L'eau présente en effet de mauvaises propriétés lubrifiantes pour un contact métal sur métal.

Par la demande de brevet européen n° 0 119 898, on connaît déjà une chaîne mécanique du type GALLE, comprenant des maillons intérieurs et extérieurs, qui sont reliés l'un à l'autre par des articulations. Chaque articulation comporte un axe, appelé également fuseau, cet axe étant amené dans deux plaques extérieures pour constituer un maillon extérieur.

Chaque fuseau tourne par l'intermédiaire d'un premier palier pourvu d'une collerette dans un tube qui est fixé à deux plaques intérieures formant un maillon intérieur.

Un rouleau tournant librement est monté sur le tube sur un second palier pourvu d'une collerette.

Les paliers pourvus de collerette sont réalisés en matière synthétique avec de bonnes propriétés mécaniques et lubrifiantes, par exemple du nylon.

Des moyens d'encliquetage sont prévus pour permettre le montage des paliers sur l'axe et sur le tube lors de l'assemblage en atelier. En raison de la présence de moyens d'encliquetage, on doit prévoir un matériau solide, qui possède néanmoins suffisamment d'élasticité pour permettre l'agrippage, par exemple du nylon éventuellement chargé de lubrifiant. Cette élasticité implique inévitablement une limitation de la résistance au fluage du matériau et donc un confinement de l'application de la chaîne à des efforts de traction, qui exercent sur les articulations des efforts de pression inférieure à 1,5 kg/mm², indépendamment du fait que les épaulements sont soumis à des chocs violents lors de chaque mise en contact de ces articulations avec le pignon moteur.

Cette demande de brevet européen suggère également, d'utiliser des bourrages d'étanchéité qui sont constitués de rondelles élastiques, qui sont mises en place entre les plaques intérieures et les plaques extérieures de la chaîne afin d'empêcher l'intrusion des corps étrangers dans les articulations.

Ces éléments séparés ne donnent pas satisfaction pour ce qui concerne l'étanchéité à l'eau. En outre elles sont difficiles à monter lors de l'assemblage de la chaîne.

La présente invention vise à remédier aux inconvénients susdits. Elle s'adresse à la réalisation d'une chaîne dont les maillons sont aptes à transmettre des efforts de traction qui correspondent à des intensités pouvant atteindre 10kg/mm$^2$ dans les articulations et dont chaque maillon est aisément démontable.

L'invention, telle qu'elle est caractérisée dans les revendications, résout le problème qui consiste à réaliser une chaîne résistant à l'usure et qui en fonctionnement sous l'eau, peut transmettre des efforts de 10 kg/mm$^2$ et ne doit pas être graissée.

Ce résultat s'obtient en plaçant autour des fuseaux en acier des maillons larges, chaque fois une douille constituée d'un élément tubulaire de section constante, réalisé en une résine phénolique armée de fibres synthétiques ou naturelles, ainsi que de deux rondelles distinctes réalisées en TEFLON® et disposées aux extrémités de l'élément tubulaire, entre les plaques extérieures et intérieures pour empêcher toute pénétration de matières étrangères provenant de l'extérieur entre les plaques extérieures et les plaques intérieures.

Dans une forme de réalisation particulière, le matériau composite est une résine phénolique armée de fibres synthétiques ou naturelles hydrophiles. La résine phénolique est renforcée en particulier d'une couche de textile.

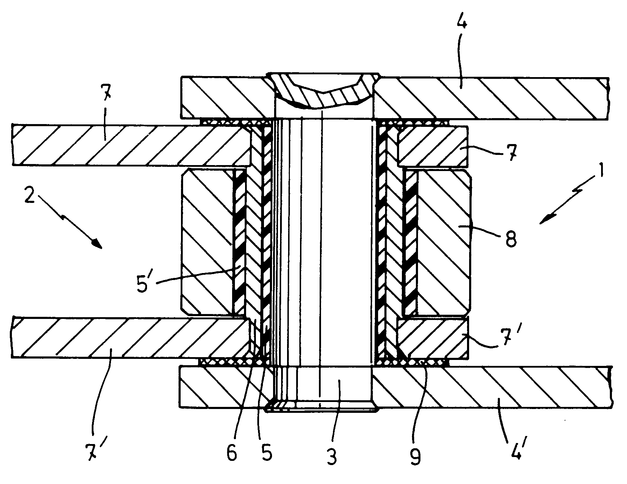

D'autres particularités et détails de l'invention apparaîtront au cours de la description détaillée suivante se référant au dessin ci-annexé qui illustre une forme de réalisation préférée de l'invention.

Dans ce dessin, la figure unique est une représentation détaillée d'une articulation.

Comme illustrée à la figure, une chaîne du type GALLE à douilles en matière synthétique est constituée d'une succession dé maillons extérieurs et intérieurs 1, 2 qui sont reliés entre eux par des articulations, constituées chacune d'un fuseau 3 qui solidarise entre eux deux plaques extérieures 4, 4' (appelées mailles). Le fuseau 3 traverse par l'intermédiaire d'une première douille 5 en matière synthétique rotative libre, un tube 6, qui est fixé à deux plaques intérieures 7, 7' et qui à son tour est entouré par un rouleau fou en métal tournant librement par l'intermédiaire d'une seconde douille 5' en matière synthétique.

Jusqu'à présent on utilise exclusivement des matériaux synthétiques autolubrifiants en tant que matériau antifriction pour réaliser les douilles en matière synthétique 5, 5' qui sont mises en place entre les fuseaux de métal 3 et le tube 6 et entre le tube 6 et le rouleau 8.

Les matières autolubrifiantes habituelles comme le nylon et le téflon possèdent d'excellentes propriétés de graissage mais présentent trop peu de résistance au fluage. Les matériaux en nylon les plus durs n'admettent que des efforts de transmission inférieurs à 1,5 kg/mm$^2$.

Par l'emploi d'un matériau composite tel que la résine phénolique avec apport de textile, on obtient les transmissions d'efforts significativement plus importants, qui peuvent atteindre jusqu'à 10 kg/mm$^2$.

Par l'emploi de matériaux synthétiques on évite les surfaces de glissement acier sur acier.

Alors qu'on ne peut utiliser jusqu'à présent que des chaînes à rouleaux en acier cémenté, qui assure une longévité convenable de la chaîne à rouleaux en fonctionnement sous l'eau sans devoir être graissé.

L'expérience a montré qu'il est très difficile de réaliser un graissage efficace dès que la chaîne est partiellement ou complètement immergée.

Selon une particularité de l'invention la première douille 5 en matière synthétique est amenée autour du fuseau d'acier 3 qui a son tour est entouré par le maillon étroit 2 dans lequel les axes 3 fuseaux des maillons larges 1 sont enserrés, ceux-ci étant protégés par une seconde douille 5' en matière synthétique qui porte enfin un rouleau 8. Par l'emploi des douilles en matière synthétique 5 et 5' on évite les surfaces de contact métal sur métal et on rend possible la réalisation d'une chaîne qui ne doit pas être graissée lors de son utilisation sous eau.

Ce choix de matériau pour le fuseau 3 et pour le tube 6 ainsi que pour les douilles supplémentaires 5, 5' en matière synthétique est important pour la longévité de la chaîne à rouleaux.

On choisit de réaliser le fuseau 3 de préférence en acier Nokoro du type 420 avec la composition suivante:

-   carbone 0,2%
-   chrome 13%

Cet acier porte le numéro "Werkstoff" 14021.

Le tube 6 est constitué du même acier mais est cémenté ou trempé.

Le rouleau est réalisé en acier du type CK 45/95, ou SC 5, commercialisé par la société SIDERO.

Les douilles 5, 5' en matière synthétique sont faites par exemple de polyamides ou de chloro- et/ou fluoro-polyethylènes.

Les tolérances des divers éléments sont de grande importance. Ils doivent tenir compte de la dilatation de la résine en cas d'utilisation sous eau.

Par la mise en plan de rondelles obturatrices 9 aux extrémités des tubes des maillons étroits 2, on évite le montage d'épaulements et on simplifie l'assemblage de la chaîne.

La réalisation de douilles de section constante exemptes de collerettes simplifie l'assemblage de la chaîne. Des rondelles de téflon 9 sont disposées sur la résine avant et après qu'un maillon étroit est assemblé par glissement.

La réalisation d'une chaîne s'effectue de la manière suivante:

On assemble d'abord les maillons étroits 2, en disposant deux maillons 7,7' aux extrémités d'un tube de métal 6, qui est pourvu d'une douille extérieure 5' en matière synthétique et d'un rouleau 8, ensuite le tube 6 est rivé.

Dans une seconde phase, on assemble les maillons larges. Ceci se passe en plaçant une douille en matière synthétique 5 dans le tube 6 et en introduisant un fuseau 3 dans la douille 5, opération suivie de la mise en place d'un joint d'étanchéité de chaque maillon extérieur 4 et 4' aux extrémités du fuseau 3. Le fuseau 3 est ensuite rivé.

Selon une particularité de l'invention, on place une rondelle 9 de téflon aux extrémités des tubes des maillons étroits.

On peut considérer que la chaîne à rouleau selon l'invention est apte à subir des réparations. Par l'emploi de goupilles, il est possible de démonter n'importe quel maillon. Ainsi les douilles en matière synthétique ainsi que les fuseaux 3 et/ou les tubes 6 métalliques peuvent être remplacés sans problème.

Les douilles en matière synthétique 5,5' selon l'invention assurent un fonctionnement silencieux. Les chocs provoqués par la variation instantannée de vitesse lors de l'engrènement de chaque maillon dans les dents du pignon, en effet amortis par les douilles supplémentaires en matière synthétique.

En outre, un matériau antifriction n'est pas soumis à des efforts exagérés, parce que la surface de pivotement entre le fuseau et le tube 6 est relativement grande. L'apport d'une douille 5,5' en matière synthétique protège ces éléments métalliques des déformations par torsion.

Il est évident que l'invention n'est pas limitée à la forme de réalisation susdite et que de nombreuses modifications peuvent y être apportées sans qu'on s'éloigne de la portée des revendications suivantes.

**Revendications**

1. Chaîne du type GALLE à douilles en matière synthétique constituée d'une série de maillons larges (1) et de maillons étroits (2), reliés entre eux par des articulations, dans laquelle les maillons larges (1) forment un ensemble comprenant au moins deux plaques parallèles extérieures (4,4') reliées entre elles par deux fuseaux (3) et les maillons étroits (2) forment un ensemble composé de deux plaques parallèles intérieures (7,7') enserrées dans les plaques extérieures (4,4') et maintenues entre elles par deux tubes métalliques (6) qui tournent librement par l'intermédiaire d'une première série de douilles (5) réalisées en matériau composite et sur lesquels ont été montés des rouleaux (8) tournant librement sur ces tubes (6) par l'intermédiaire d'une seconde série de douilles (5') en matériau composite, caractérisée en ce que chaque douille (5) de la première série de douilles (5) au moins, est constituée d'un élément tubulaire de section constante, réalisé en une résine phénolique armée de fibres synthétiques ou naturelles, ainsi que de deux rondelles distinctes (9, 9') réalisées en TEFLON® et disposées aux extrémités de l'élément tubulaire, entre les plaques extérieures (4, 4' ) et intérieures (7, 7') pour empêcher toute pénétration de matières étrangères provenant de l'extérieur entre les plaques extérieures (4, 4') et les plaques intérieures (7, 7').

2. Chaîne à douilles en matière synthétique, selon la revendication 1, caractérisée en ce que les fibres synthétiques ou naturelles sont hydrophiles.

3. Chaîne à douilles en matière synthétique, selon la revendication 1 ou 2, caractérisée en ce que le matériau de l'armature de renforcement de la résine phénolique est une couche de textile.

**Claims**

1. A flat link articulated chain comprising bushes of synthetic material and made up of a number of wide links (1) and narrow links (2) interconnected by joints, the wide links (1) forming an assembly comprising at least two parallel outer plates (4,4') interconnected by two spindles (3) and the narrow links (2) forming an assembly comprising two parallel inner plates (7,7') clamped between the outer plates (4,4') and held together by two metal tubes (6) which rotate freely via a first set of bushes (5) made of composite material, on which rollers (8) are mounted and rotate freely on the tubes (6) via a second set of bushes (5') of composite material, characterised in that each bush (5) in at least the first set of bushes (5) comprises a tubular component of constant cross-section made of a phenolic resin reinforced with synthetic or natural fibres and two separate washers (9,9') made of TEFLON® disposed at the ends of the tubular component between the outer plates (4,4') and the inner plates (7,7') to prevent any foreign substances from the exterior penetrating between the outer plates (4,4') and the inner plates (7,7').

2. A chain comprising bushes of synthetic material according to claim 1, characterised in that the synthetic or natural fibres are hydrophilic.

3. A chain comprising bushes of synthetic material according to claim 1 or 2, characterised in that the material constituting the reinforcing skeleton of the phenolic resin is a layer of textile.

**Patentansprüche**

1. Laschenkette mit Buchsen aus Kunststoff, bestehend aus einer Reihe von breiten Kettengliedern (1) und schmalen Kettengliedern (2), die mittels Gelenken miteinander verbunden sind, wobei die breiten Kettenglieder (1) eine Einheit mit mindestens zwei durch zwei Bolzen (3) miteinander verbundenen parallelen Außenplatten (4, 4') bilden und die schmalen Kettenglieder (2) eine Einheit mit zwei parallelen Innenplatten (7, 7') bilden, die zwischen den Außenplatten (4, 4') eingespannt und von zwei Metallrohren (6) zwischen diesen gehalten sind, welche unter Zwischenschaltung einer ersten Reihe von aus Verbundwerkstoff hergestellten Buchsen (5) frei drehbar sind und an denen auf diesen Rohren (6) unter Zwischenschaltung einer zweiten Reihe von Buchsen (5') aus Verbundwerkstoff frei drehbare Rollen (8) gelagert sind, dadurch gekennzeichnet, daß jede Buchse (5) zumindest der ersten Reihe von Buchsen (5) durch ein rohrförmiges Element mit konstantem Querschnitt, das aus einem mit synthetischen oder natürlichen Fasern verstärkten Phenolharz hergestellt ist, sowie durch zwei separate Scheiben (9, 9'), die aus TEFLON® hergestellt und an den Enden des rohrförmigen Elements zwischen den Außenplatten (4, 4') und den Innenplatten (7, 7') zur Verhinderung jeglichen Eindringens von von außen kommenden Fremdsubstanzen zwischen die Außenplatten (4, 4') und die Innenplatten (7, 7') angeordnet sind, gebildet ist.

2. Kette mit Buchsen aus Kunststoff nach Anspruch 1, dadurch gekennzeichnet, daß die synthetischen oder natürlichen Fasern hydrophil sind.

3. Kette mit Buchsen aus Kunststoff nach Anspruch 1 oder 2, dadurch gekennzeichnet, daß das Material des Verstärkungseinsatzes des Phenolharzes eine Gewebeeinlage ist.